Europäisches Patentamt

European Patent Office

Office européen des brevets

(11) Veröffentlichungsnummer : **0 081 182 B1**

(12) **EUROPÄISCHE PATENTSCHRIFT**

(45) Veröffentlichungstag der Patentschrift :
**30.07.86**

(51) Int. Cl.⁴ : **B 01 D 13/04**

(21) Anmeldenummer : **82111042.6**

(22) Anmeldetag : **30.11.82**

(54) Folie zum Trennen flüssiger oder gasförmiger Mehrkomponentensysteme.

(30) Priorität : 07.12.81 DE 3148312

(43) Veröffentlichungstag der Anmeldung :
15.06.83 Patentblatt 83/24

(45) Bekanntmachung des Hinweises auf die Patenterteilung : 30.07.86 Patentblatt 86/31

(84) Benannte Vertragsstaaten :
BE CH DE FR GB IT LI LU NL SE

(56) Entgegenhaltungen :
DE-A- 2 722 025
FR-A- 587 077
FR-A- 1 564 281
US-A- 2 944 017
US-A- 3 721 596

(73) Patentinhaber : HOECHST AKTIENGESELLSCHAFT
Postfach 80 03 20
D-6230 Frankfurt am Main 80 (DE)

(72) Erfinder : Walch, Axel, Dr.
Hans-Sachs-Strasse 5
D-6000 Frankfurt (DE)
Erfinder : Beer, Ekkehard
Liebigstrasse 4
D-6208 Bad Schwalbach (DE)

## Beschreibung

Die Erfindung betrifft eine Folie, die dazu dient, von Lösungen oder anderen flüssigen oder gasförmigen Mehrkomponentensystemen eine oder Teile einer Komponente abzutrennen, bestehend aus einer flächenhaften semipermeablen Membran, die auf einer für strömungsfähige Medien durchlässigen, beidseitig glatten Trägerschicht aufgebracht ist.

Es ist bereits bekannt, zur Abscheidung einzelner Komponenten aus verschiedenen flüssigen Mischungen, insbesondere aus Lösungen, semipermeable Membranen zu verwenden. So werden semipermeable Membranen beispielsweise verwendet zur Abscheidung flüssiger Komponenten aus einer Flüssigkeitsmischung, zur Abscheidung gasförmiger Komponenten aus einer Gasmischung und zur Abscheidung flüssiger Lösemittel aus einer diese Lösemittel und einen darin gelösten Stoff enthaltenden Mischung. Mehr und mehr Bedeutung gewinnen solche Abscheidungsprozesse speziell im Zusammenhang mit Frischwasserbereitung aus Meer- und Salzwasser.

Das Material, aus dem diese semipermeablen Membranen bestehen, ist meist ein organisches Polymeres, wie z. B. Celluloseacetat, welches allerdings sehr dünn ausgebildet sein muß und daher nur eine geringe Zerreißfestigkeit aufweist. Es ist daher üblich, zum Schutz der strukturell schwachen Membranstoffe gegen Verformung oder Beschädigung durch hydraulischen Druck oder mechanische Einwirkung diese mit einem Träger- oder Stützmaterial zur versehen. Derartige Trägermaterialien sind beispielsweise in der DE-B-26 55 014 beschrieben und bestehen meist aus porösem aber festem, gewebeartigem Material. Weitere semipermeable Membranen und Verfahren und deren Herstellung sind aus der DE-A-24 53 128 und der DE-B-23 42 226 bekannt.

Ein Verfahren zur Herstellung einer Ultrafiltrationsmembran, welche sehr hohen Drücken zu widerstehen vermag wird in der FR-A-587 077 beschrieben. Zu diesem Zweck wird in die Membran ein Verstärkung in Form eines Gewebes oder Netzwerkes inkorporiert und außerdem wird die Membran auf eine genügend harte Unterlage aufgebracht. Die harte Unterlage soll insbesondere aus Glas, Porzellan oder Metall bestehen, wobei die Unterlage zusätzlich, um ein Abfließen des Permeats zu gewährleisten, mit Durchbrechungen versehen sein muß.

Derartig harte und starke Materialien haben aber den Nachteil, daß sie sich nicht in kompakten Membranscheidevorrichtungen einsetzen lassen, denn bei der Abscheidung flüssiger Komponenten aus Flüssigkeitsmischungen ist einer der Betriebsparameter, der die erhältliche Durchsatzmenge beeinflußt, die mit der zugeführten Flüssigkeitsmenge in Berührung gelangende Gesamtoberfläche der Membran. Um eine möglichst große Membranoberfläche je Volumeneinheit zu erreichen, sind zahlreiche Vorrichtungen beschrieben worden, die Membranstapel, Membransäcke oder gewickelte Rohre aus Membranstoffen aufweisen. Spiralförmige Membranscheidevorrichtungen werden beispielsweise in der DE-B-14 42 366, der DE-B-14 42 420 und der DE-B-15 17 915 beschrieben.

Aber nicht alleine die genutzte Oberfläche der Membran ist für die Ausgestaltung einer Membranscheidevorrichtung von ausschlaggebender Bedeutung, sondern als zweiter Parameter ist hierbei die Art der Überströmung der Membranoberfläche zu berücksichtigen. Optimal geführte Strömungsführungen verhindern Ablagerungen auf der Membran, die zu Verstopfungen führen können, senken die Konzentrationspolarisation an der aktiven Membranschicht auf ein Minimum und gewährleisten eine maximale Permeation. Zur Ausbildung von Strömungswegen, auf denen die Flüssigkeit an die Membran herantreten kann, werden daher Abstandshalter (sogenannte Spacer) in geschichtete oder gewickelte Membranscheidevorrichtungen eingebracht. Solche Abstandshalter werden beispielsweise in der DE-A-28 29 893 beschrieben.

Allen diesen bekannten geschichteten oder spiralförmig aufgewickelten Bauformen ist gemeinsam, daß sie Membranfolien mit glatten ebenen Oberflächen verwenden, die mit weitmaschigen gewebeartigen Abstandshaltern kombiniert werden, um ein Herantreten von Flüssigkeit an die Membranoberfläche zu gewährleisten. Ein derartiger Abstandshalter übt in den bekannten Konstruktionen nicht nur abstandshaltende Funktion aus, sondern er wirkt zusätzlich auch als Strömungsbrecher und Turbulenzpromotor, weil er ein Geflecht von Fäden darstellt, das zwischen den Fäden Hohlräume und an deren Kreuzungspunkten Verdickungen aufweist. Durch die Turbulenzen wird zwar einerseits die Tendenz zum Aufbau von Ablagerungen auf der Membran vermindert, andererseits entstehen aber unzureichend durchströmte Totzonen, und die ganze Vorrichtung besitzt einen relativ hohen Strömungswiderstand. Eine gleichmäßige laminare Strömung, die zur Verhinderung der Konzentrationspolarisation vorteilhaft ist, kann sich somit bei der bekannten Kombination von glatten Membranen und gewebeartigen Abstandshaltern nicht ausbilden. Auch kompliziert das Einlegen der Abstandshalterschicht die Herstellung von spiral- oder schichtartig aufgebauten Membranscheidevorrichtungen und erhöht damit die Fertigungskosten. Eine andere Möglichkeit, Strömungswege in geschichteten oder gewickelten Membranscheidevorrichtungen, zu erzeugen, wird in der DE-A-27 22 025 beschrieben. Dort wird eine Membraneinheit offenbart, deren Trägerschicht und darauf aufgebrachte permselektive Membran eine Profilierung aufweist. Dabei kann beim Schichten oder spiralförmigen Aufwickeln der Membraneinheit auf einen Abstandshalter verzichtet werden, da die Strömungswege zwischen den Schichten durch die Profilierung des Trägermaterials bereits vorgezeichnet sind. Diese Membraneinheiten sind aber nur für spezifische Adsorptionsverfahren, z. B. in der Medizin, geeignet, und überdies entstehen bei den so hergestellten Membraneinheiten relativ großflächige erhabene Bereiche, die bei anderen Anwendungen eine Konzentrationspolarisation meist unzureichend verhindern.

Aufgabe der Erfindung ist es somit, eine Folie bereitzustellen, die es ermöglicht, die Herstellung von schichtförmigen oder spiralartig aufgebauten Membranscheidevorrichtungen, die zur Trennung flüssiger oder gasförmiger Mehrkomponentensysteme dienen, durch den Wegfall der separaten Abstandshalter-Schicht zu vereinfachen und gleichzeitig damit verbesserte Strömungsverhältnisse in den Zwischenräumen der Membranschichten zu schaffen, und dabei die Nachteile von bereits vorprofiliertem Trägermaterial zu beseitigen.

Gelöst wird diese Aufgabe durch eine Folie der eingangs genannten Gattung, die dadurch gekennzeichnet ist, daß die der glatten Trägerschicht abgewandte Oberfläche der Folie Profilierungen aufweist, die durch Profilgebungselemente aus im Querschnitt runden oder rechteckigen Fäden aus extrudierbarem thermoplastischem Kunststoff gebildet oder hervorgerufen werden, welche parallel zueinander angeordnet sind.

In besonderen Ausführungsformen der Erfindung sind die Profilierungen durch Profilgebungselemente hervorgerufen, welche entweder mit der glatten Oberfläche der Membranschicht fest verbunden sind (Figur 1) oder teilweise in die Membranschicht eingelassen sind, aber noch aus ihr herausragen (Figur 2), oder sich derart lagefixiert zwischen der Trägerschicht und der Membranschicht befinden, daß sie auf der Trägerschicht aufliegen und von der Membranschicht überdeckt werden (Figur 3).

Die semipermeable Membran kann bestehen aus dem bereits für derartige Zwecke eingesetzten Material, wie z. B. regenerierter Cellulose, Celluloseester, Celluloseether, Kohlenhydratgele, Polypeptide, Proteine, Polyamide, Polysulfone, Blockcopolymere mit Polycarbonat, Polymere oder Copolymere von Derivaten der Acrylsäure oder Metacrylsäure, wie Nitrile und Ester, oder Polymere oder Copolymere mit Vinylalkohol. Die Porengröße der semipermeablen Membran liegt im Bereich von $2 \cdot 10^{-4}$ bis 10 $\mu$m.

Die semipermeable Membran befindet sich vorzugsweise auf einer für strömungsfähige Medien durchlässigen Trägerschicht, die zur Aufnahme des Permeats und dessen Ableitung dient. Sie dient auch zur Verstärkung und Stützung der Membran, so daß die Membran leicht zu handhaben ist und Membranbeschädigungen vermieden werden. Die semipermeable Membran kann aber auch genausogut ohne Trägermaterial verwendet werden.

Die Trägerschicht ist beidseitig glatt und besteht beispielsweise aus Papier, einem Gewebe, Vlies oder Maschennetz aus Kunststoff oder Metall. Auch Platten oder Folien aus porösem oder saugfähigem Material sind als Trägerschicht geeignet ; sie bestehen beispielsweise aus gesintertem Polyethylen, aber auch aus saugfähigem Kunstschwamm, insbesondere aus regenerierter Cellulose, die als Schwammtuchmaterial bekannt ist. Unter glatt ist zu verstehen, daß die Oberflächen sich jeweils in einer einzigen Ebene erstrecken, d. h. keine Vorsprünge aufweisen. Für Anwendungen, die sehr kompakte Membraneinheiten erfordern, kann die Trägerschicht aber auch entfallen, so daß nur Membran und Profilgebungselemente vorliegen. Die Profilgebungselemente bestehen aus Material, das zur dauerhaften Verbindung mit der Membran befähigt ist, ohne diese in ihren sonstigen Eigenschaften nachteilig zu beeinträchtigen ; bevorzugt werden extrudierbare thermoplastische Kunststoffe wie Polyamid, Polyester, Polyethylen oder Polypropylen verwendet. Aus diesen Materialien können zum Beispiel Fäden von rundem, dreieckigem, rechteckigem oder vieleckigem Querschnitt auf die Oberfläche der Membran aufextrudiert, aufgeschweißt, aufgeklebt oder auf sonstige Art dort befestigt sein oder es können in den anderen Ausführungsformen der Erfindung diese Fäden teilweise in die Membranschicht eingelassen sein oder sie können sich lagefixiert zwischen Trägerschicht und Membranschicht befinden. Die Fäden können an ihrer ganzen Auflagefläche an der Unterlage befestigt sein oder nur innerhalb einzelner diskreter Bereiche. Das Aufbringen der Fäden kann durchgehend oder unterbrochen erfolgen, wobei die Fäden auch aus Ketten aufeinanderfolgender punktförmiger Erhebungen bestehen können. Bevorzugt sind diese Fäden oder Punktketten parallel zueinander angeordnet, damit sich bei Schichtung oder Wicklung der Folie Kanäle ausbilden können, durch die das zu trennende Gemisch hindurchströmen kann. Die Profilgebungselemente können aber auch in der Art angeordnet sein, daß sie ein kreuzartiges Netzwerk auf der Unterlage bilden, wodurch, falls gewünscht, in der Strömung Turbulenzen entstehen, oder sie können kurvenförmig oder auch nur punktförmig in unregelmäßiger Verteilung über die Fläche angeordnet sein.

Weiterer Gegenstand der vorliegenden Erfindung sind Verfahren zur Herstellung erfindungsgemäßer Folien. In einem ersten Verfahren wird eine Lösung, die ein zur Membranbildung befähigtes Material enthält, auf eine profilierte Unterlage gegossen und nach dem Phaseninversionsverfahren in die Membran überführt. Bei dem Phaseninversionsverfahren läßt man auf die flüssige Schicht, die ein zur Membranbildung befähigtes Material enthält, eine Fällflüssigkeit einwirken, wodurch das membranbildende Material koaguliert. Nach Entfernung der Flüssigkeit zieht man dann die Membran von der mit Profilierungen versehenen Unterlage ab und erhält so die Profilierungen im Negativ auf der Membranoberfläche. Die Unterlage, auf die die Lösung mit dem membranbildenden Material aufgegossen wird, nennt man Releasematerial, weil man sie immer wieder verwenden kann. Man erhält so trägerfreie, profilierte Membranen.

In einem weiteren Verfahren zur Herstellung erfindungsgemäßer Folien wird eine Lösung, die ein zur Membranbildung befähigtes Material enthält, durch eine Düse, die einen Schlitz enthält, der auf der einen Seite durch einen geraden Rand und auf der anderen Seite durch einen Rand mit Profilierungen begrenzt ist, in ein Fällbad eingesponnen und nach dem Phaseninversionsverfahren in die Membran überführt. Auch hier wird das Phaseninversionsverfahren so durchgeführt, daß, nachdem das zur Membranbildung befähigte Material koaguliert ist, die Flüssigkeit entfernt und so eine trägerfreie Membran erhalten wird.

Bringt man des Extrudat aus der Düse gleich auf einer für strömungsfähige Medien durchlässigen Trägerschicht auf und führt dann das Phaseninversionsverfahren durch, so erhält man eine Folie, bestehend aus der Membranschicht, welche auf ihrer Oberfläche Profilierungen aufweist und welche sich auf der Trägerschicht befindet.

In einem weiteren Verfahren zur Herstellung der erfindungsgemäßen Folie werden Profilgebungselemente auf die Oberfläche der Membran, welche gegebenenfalls mit einem Trägermaterial verbunden sein kann, aufgebracht und mit ihr festhaltend verbunden. Dies kann beispielsweise in einem Extrusionsprozeß geschehen, in welchem das thermoplastische Kunststoffmaterial in schmelzflüssigem Zustand, beispielsweise in Form eines Fadens, auf die Oberfläche der Membran aufextrudiert wird und sich beim Erstarren fest mit dem Membranmaterial verbindet, oder aber es kann das vorextrudierte thermoplastische Kunststoffmaterial der Profilierungselemente mit einem Klebstoff auf der Oberfläche der Membran befestigt werden. Als Klebstoffe werden bevorzugt Schmelzklebstoffe verwendet; diese können sein Polyethylen, Polypropylen, Polyurethane sowie andere bekannte Wachse künstlicher oder natürlicher Art.

In einem weiteren Verfahren zur Herstellung der erfindungsgemäßen Folien werden die Profilgebungselemente in die noch flüssige oder teilweise flüssige Membranschicht teilweise eingebettet, so daß sie in gewünschter Höhe noch hinreichend weit aus ihr herausragen, und sie gehen bei der Verfestigung der Membranschicht so eine festhaftende Verbindung mit dieser ein. Dabei können als Profilgebungselemente entweder Fäden oder Netzwerke verwendet werden; die Kreuzungspunkte der Netzwerke können dabei knotenartige Verdickungen darstellen, so daß auf diese Art punktförmige Profilgebungselemente erhalten werden können.

In einem weiteren Verfahren zur Herstellung der erfindungsgemäßen Folien werden die als Profilgebungselemente dienenden Fäden direkt auf das Trägermaterial aufgebracht, dort befestigt, und auf die so entstandene profilierte Oberfläche des Trägermaterials wird dann die semipermeable Membran so aufgebracht, daß sie sich an die vorgegebene Profilierung anpaßt, wodurch die Außenseite der Membran entsprechend profiliert wird.

Die erfindungsgemäße Folie kann verwendet werden zur Herstellung von spiral- oder schichtartig aufgebauten Membranscheidevorrichtungen. Solche Vorrichtungen sind dem Fachmann bekannt, die erfindungsgemäße Folie hat aber den Vorteil, daß beim Aufbau der bekannten Membranscheidevorrichtungen aus dieser das Einlegen einer speziellen Abstandshalterschicht, durch welche ein Herantreten des zu trennenden Gemisches an die Membranoberfläche ermöglicht wird, entbehrlich wird. Dieser Vorteil wird durch die erfindungsgemäße Profilierung, welche sich auf der Oberfläche der Folie befindet und durch welche bei spiralartiger oder schichtweiser Anordnung der Folie die Ausbildung von Strömungskanälen erreicht wird, ermöglicht.

Durch die nachfolgenden Zeichnungen soll die Erfindung näher erläutert werden.

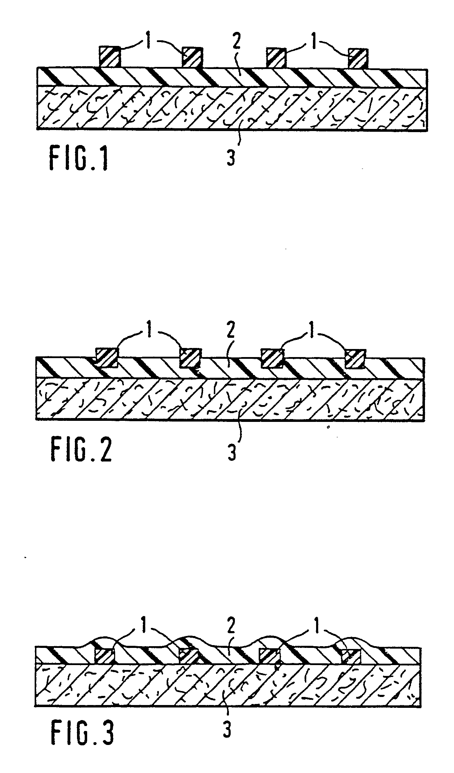

Figur 1 zeigt eine Ausführungsform der erfindungsgemäßen Folie im Schnitt, bei der die Profilgebungselemente 1 mit der Oberfläche der glatten Membranschicht 2 fest verbunden sind.

Figur 2 zeigt eine Ausführungsform der erfindungsgemäßen Folie im Schnitt, bei der die Profilgebungselemente 1 teilweise in die Membranschicht 2 eingelassen und mit dieser fest verbunden sind.

Figur 3 zeigt eine Ausführungsform der erfindungsgemäßen Folie im Schnitt, bei der die Profilgebungselemente 1 sich derart zwischen der Trägerschicht 3 und der Membranschicht 2 lagefixiert befinden, daß sie auf der Trägerschicht aufliegen.

## Patentansprüche

1. Folie, insbesondere zum Trennen flüssiger oder gasförmiger Mehrkomponentensysteme, bestehend aus einer flächenhaften semipermeablen Membran, die auf einer für strömungsfähige Medien durchlässigen, beidseitig glatten Trägerschicht aufgebracht ist, dadurch gekennzeichnet, daß die der glatten Trägerschicht abgewandte Oberfläche der Folie Profilierungen aufweist, die durch Profilgebungselemente aus im Querschnitt runden oder rechteckigen Fäden aus extrudierbarem thermoplastischem Kunststoff gebildet oder hervorgerufen werden, welche parallel zueinander angeordnet sind.

2. Folie nach Anspruch 1, dadurch gekennzeichnet, daß die Profilierungen durch Profilgebungselemente hervorgerufen werden, die teilweise in die Membranschicht eingelassen sind.

3. Folie nach Anspruch 1, dadurch gekennzeichnet, daß die Profilierungen durch Profilgebungselemente hervorgerufen werden, die sich derart zwischen der Trägerschicht und der Membranschicht lagefixiert befinden, daß sie auf der Trägerschicht aufliegen.

4. Folie nach einem der Ansprüche 1 bis 3, dadurch gekennzeichent, daß die als Profilgebungselemente dienenden Fäden über die gesamte Länge ihrer Auflagenfläche fest mit der semipermeablen Membran verbunden sind.

5. Folie nach einem der Ansprüche 1 bis 3, dadurch gekennzeichnet, daß die als Profilgebungselemente dienenden Fäden nur innerhalb einzelner diskreter Bereiche ihrer Auflagenfläche fest mit der semipermeablen Membran verbunden sind.

6. Folie nach einem der Ansprüche 1 bis 3, dadurch gekennzeichnet, daß die als Profilgebungselemente dienenden Fäden in regelmäßigen Abständen unterbrochen sind.

7. Folie nach einem der Ansprüche 1 bis 3, dadurch gekennzeichnet, daß die Profilierungen als Punktketten ausgebildet sind, die parallel zueinander verlaufen.

8. Folie nach einem der Ansprüche 1 bis 3, dadurch gekennzeichnet, daß die Profilierungen aus einer großen Vielzahl unregelmäßig über die ganze Folienoberfläche verteilter punktförmiger Erhebungen bestehen.

9. Verfahren zur Herstellung einer Membranfolie nach einem der Ansprüche 1 bis 8, die auf ihrer Oberfläche Profilierungen aufweist, dadurch gekennzeichnet, daß eine Lösung, die ein zur Membranbildung befähigtes Material enthält, auf eine profilierte Unterlage aufgegossen und nach dem Phaseninversionsverfahren in die Membran überführt wird.

10. Verfahren zur Herstellung einer Membranfolie nach einem der Ansprüche 1 bis 8, die auf ihrer Oberfläche Profilierungen aufweist, dadurch gekennzeichnet, daß eine Lösung, die ein zur Membranbildung befähigtes Material enthält, durch eine Düse, die einen Schlitz enthält, der auf der einen Seite durch einen geraden Rand und auf der anderen Seite durch einen Rand mit Profilierungen begrenzt ist, in ein Fällbad eingesponnen und nach dem Phaseninversionsverfahren in die Membran überführt wird.

11. Verfahren nach Anspruch 10, dadurch gekennzeichnet, daß das Extrudat aus der Düse auf eine für strömungsfähige Medien durchlässige Trägerschicht aufgebracht wird.

12. Verfahren zur Herstellung einer Membranfolie nach einem der Ansprüche 1 bis 8, die auf ihrer Oberfläche Profilierungen aufweist, welche durch Profilgebungselemente gebildet werden, dadurch gekennzeichnet, daß die Profilgebungselemente aus extrudierbarem thermoplastischem Material in einem Extrusionsprozeß auf die Oberfläche der Membran aufgebracht und fest mit ihr verbunden werden.

13. Verfahren zur Herstellung einer Membranfolie nach Anspruch 12, dadurch gekennzeichnet, daß die Profilgebungselemente mit einem Schmelzkleber festhaftend auf der Oberfläche der Membran befestigt werden.

14. Verfahren zur Herstellung einer Membranfolie nach Anspruch 12, dadurch gekennzeichnet, daß die Profilgebungselemente in die noch flüssige Membranschicht teilweise eingebettet werden und bei deren Verfestigung eine festhaftende Verbindung mit ihr eingehen.

15. Verfahren zur Herstellung einer Membranfolie nach Anspruch 12, dadurch gekennzeichnet, daß die semipermeable Membran auf die bereits mit den Profilgebungselementen versehene Trägerschicht aufgebracht wird.

16. Verwendung einer Folie nach einem der Ansprüche 1 bis 8, hergestellt nach einem Verfahren nach einem der Ansprüche 9 bis 15, zur Herstellung von spiral- oder schichtartig aufgebauten Membranscheidevorrichtungen, wobei die als Profilgebungselemente dienenden Fäden oder Punktketten parallel zur Strömungsrichtung des Strömungsmediums angeordnet sind.

**Claims**

1. A film, in particular for separating liquid or gaseous multicomponent systems, which is comprised of a sheet-like semipermeable membrane applied to a support layer which is smooth on both sides and permeable to media capable of flow, wherein the surface of the film which faces away from the smooth support layer has profiling generated by profile-imparting elements which are comprised of threads having a circular or rectangular cross-section and being arranged parallel to one another.

2. A film as claimed in claim 1, wherein the profiling is generated by profile-imparting elements which are partially embedded in the membrane layer.

3. A film as claimed in claim 1, wherein the profiling is generated by profile-imparting elements which are positionally fixed in such a way between the support layer and the membrane layer that they rest on the support layer.

4. A film as claimed in any of claims 1 to 3, wherein the threads serving as profile-imparting elements are firmly bonded over the entire length of their support area to the semipermeable membrane.

5. A film as claimed in any of claims 1 to 3, wherein the threads serving as profile-imparting elements are firmly bonded only within single discrete zones of their support area to the semipermeable membrane.

6. A film as claimed in any of claims 1 to 3, wherein the threads serving as profile-imparting elements are interrupted at regular intervals.

7. A film as claimed in ary of claims 1 to 3, wherein the profiling is formed by dot chains which run parallel to one another.

8. A film as claimed in any of claims 1 to 3, wherein the profiling is comprised of a plurality of dot-shaped elevations which are distributed in irregular fashion over the entire film surface.

9. A process for preparing a membrane film as claimed in any of claims 1 to 8, which has profiling on its surface, wherein a solution which contains a material capable of membrane formation is poured onto a profiled substrate and converted by the phase inversion method to give the membrane.

10. A process for preparing a membrane film as claimed in any of claims 1 to 8, which has profiling on its surface, wherein a solution, which contains a material capable of membrane formation, is spun, through a die provided with a slot delimited on one side by a straight edge and on the other side by an edge with profiling, into a coagulation bath, and is converted by the phase inversion method to give the membrane.

11. The process as claimed in claim 10, wherein the extrudate is applied from the die onto a support layer permeable to media capable of flow.

12. A process for preparing a membrane film as claimed in any of claims 1 to 8, which has on its surface profiling formed by profile-imparting elements, wherein the profile-imparting elements are comprised of an extrudable thermoplastic material and are applied in an extrusion process to the surface of the membrane and firmly bonded to it.

13. The process for preparing a membrane film as claimed in claim 12, wherein the profile-imparting elements are firmly bonded to the surface of the membrane by means of a thermoplastic adhesive.

14. The process for preparing a membrane film as claimed in claim 12, wherein the profile-imparting elements are partially embedded in the still liquid membrane layer and become firmly bonded to the layer when the latter solidifies.

15. The process for preparing a membrane film as claimed in claim 12, wherein the semipermeable membrane is applied to the support layer already provided with the profile-imparting elements.

16. The use of a film as claimed in any of claims 1 to 8, prepared as claimed in any of claims 9 to 15, for manufacturing membrane separating devices having a spiral-like or layered structure, with the threads serving as profile-imparting elements being arranged parallel to the direction of flow of the flow medium.

**Revendications**

1. Feuille, en particulier pour la séparation de systèmes multiconstituants liquides ou gazeux, constituée d'une membrane semi-perméable capable de former une feuille, qui est appliquée sur une couche de support lisse des deux côtés et perméable à des milieux capables de s'écouler, caractérisée en ce que la surface de la feuille opposée à la couche de support lisse présente des profilages qui sont formés ou provoqués par des éléments de profilage en forme de filaments de section ronde ou rectangulaire en matière thermoplastique extrudable, lesquels sont disposés parallèlement les uns aux autres.

2. Feuille suivant la revendication 1, caractérisée en ce que les profilages sont provoqués par des éléments de profilage qui sont introduits en partie dans la couche de membrane.

3. Feuille suivant la revendication 1, caractérisée en ce que les profilages sont provoqués par des éléments de profilage qui se trouvent fixés en position entre la couche de support et la couche de membrane de telle sorte qu'ils reposent sur la couche de support.

4. Feuille suivant l'une des revendications 1 à 3, caractérisée en ce que les filaments servant d'éléments de profilage sont liés sur toute la longueur de leur surface d'appui à la membrane semi-perméable.

5. Feuille suivant l'une des revendications 1 à 3, caractérisée en ce que les filaments servant d'éléments de profilage ne sont liés solidement à la membrane semi-perméable que dans des régions individuelles séparées de leur surface d'appui.

6. Feuille suivant l'une des revendications 1 à 3, caractérisée en ce que les filaments servant d'éléments de profilage sont interrompus à des intervalles réguliers.

7. Feuille suivant l'une des revendications 1 à 3, caractérisée en ce que les profilages revêtent la forme de chaînes de points qui sont parallèles les unes aux autres.

8. Feuille suivant l'une des revendications 1 à 3, caractérisée en ce que les profilages se composent d'un grand nombre d'éminences en forme de points réparties irrégulièrement sur toute la surface de la feuille.

9. Procédé de fabrication d'une feuille de membrane suivant l'une quelconque des revendications 1 à 8, qui présente sur sa surface des profilages, caractérisé en ce qu'une solution qui contient une matière capable de former une membrane est versée sur une base profilée et transformée en la membrane par le procédé d'inversion des phases.

10. Procédé de fabrication d'une feuille de membrane suivant l'une quelconque des revendications 1 à 8, qui présente sur sa surface des profilages, caractérisé en ce qu'une solution qui contient une matière capable de former une membrane, est filée à travers une filière qui comporte une fente, laquelle est limitée sur un premier côté par un bord droit et sur l'autre côté par un bord avec des profilages, dans un bain de précipitation et transformée en la membrane par le procédé d'inversion de phases.

11. Procédé suivant la revendication 10, caractérisé en ce que l'extrudat sortant de la filière est appliqué sur une couche de support perméable aux milieux capables de s'écouler.

12. Procédé de fabrication d'une feuille de membrane suivant l'une quelconque des revendications 1 à 8, qui présente sur sa surface des profilages formés par des éléments de profilage, caractérisé en ce que les éléments de profilage en matière thermoplastique extrudable sont appliqués sur la surface de la membrane par un procédé d'extrusion et liés solidement avec elle.

13. Procédé de fabrication d'une feuille de membrane suivant la revendication 12, caractérisé en ce que les éléments de profilage sont fixés solidement sur la surface de la membrane avec une colle par fusion.

14. Procédé de fabrication d'une feuille de membrane suivant la revendication 12, caractérisé en ce que les éléments de profilage sont partiellement noyés dans la couche de membrane encore liquide, et donnent lieu, lors de sa solidification, à une 'liaison solide avec elle.

15. Procédé de fabrication d'une feuille de membrane suivant la revendication 12, caractérisé en ce que la membrane semi-perméable est appliquée sur la couche de support déjà munie des éléments de profilage.

16. Utilisation d'une feuille suivant l'une quelconque des revendications 1 à 8, fabriquée par un procédé suivant l'une quelconque des revendications 9 à 15, pour la fabrication de dispositifs de séparation à membrane de construction spiralée ou en couches, les filaments ou chaînes de points servant d'éléments de profilage étant disposés parallèlement à la direction d'écoulement du milieu d'écoulement.

FIG.1

FIG.2

FIG.3